# EUROPEAN PATENT SPECIFICATION

(11) **EP 2 595 468 B1**
(45) Date of publication and mention of the grant of the patent: **06.04.2016**
(21) Application number: 11728299.6
(22) Date of filing: 30.06.2011
(51) Int. Cl.: A01D 43/10, A01D 43/08

(54) **CRACKER ROLLER ASSEMBLY**
BRECHWALZENANORDNUNG
ENSEMBLE BROYEUR À ROULEAUX

(30) Priority: 22.07.2010 GB 201012281
(43) Date of publication of application: 29.05.2013
(73) Proprietor: AGCO International GmbH, 8212 Neuhausen am Rheinfall (CH)
(72) Inventor: FRIEL, Holger, 19288 Glaisin (DE); SCHLEGEL, Christoph, 18057 Rostock (DE)
(74) Representative: AGCO Intellectual Property Department
(86) International application number: PCT/EP2011/061075
(87) International publication number: WO 2012/010396

(56) References cited:
- EP-A1- 1 600 049
- EP-A1- 1 787 504
- DE-A1-102008 012 487
- US-A- 2 963 841
- US-B1- 6 685 118

## Description

This invention relates to a roller assembly on a harvesting machine. More specifically, the invention relates to a cracker roller assembly on a forage harvester.

Forage harvesters are used to harvest different kinds of crops which may require different harvesting processes. If, for example, grass is harvested the forage harvester cuts the grass from the field, compresses the grass in the compression rollers before chopping the harvested material into smaller parts in a chopper drum. The chopped grass is then discharged by a blower via a spout into an accompanying trailer. If, for example, a kernel crop such as maize, is harvested the harvesting process requires an additional step to crack the closed skin of the kernels, therefore, a cracker unit is provided between the chopper drum and the blower to crush each kernel.

Cracker units typically comprise two longitudinal cracker rollers which are arranged with a roller gap (longitudinal space) inbetweeen through which harvested crop is fed. The cracker rollers are typically positioned at a specified spacing defining the roller gap. The size of the roller gap and the force exerted by the cutters on the crop can be adjusted by controllers. The roller gap may be adjusted according to the type of crop being harvested and/or the desired yield. Upon entry of a foreign body through the roller gap, one or both of the rollers can yield a certain distance against the force of the resilient clement. The size of the roller gap can be measured during harvesting and its size can be adjusted during harvesting. The size of the roller gap can be adjusted by a single, or dual acting hydraulic or pneumatic cylinder and a controller may be used to actuate the hydraulic or pneumatic cylinders. The roller gap may also be adjusted using an electric motor.

DE102008012487 describes a cracker unit comprising two rollers driven by a belt arrangement which are mounted to two respective frames for rotatable. movement about their longitudinal axes with a roller gap therebetween. The two frames are mounted parallel to the longitudinal axes of the rollers and are both pivotable. A bracing mechanism is arranged on one side of the roller gap which pre-tensions the first and second frames and which can be adjusted to adjust the size of the roller gap.

EP1600049 describes a cracker unit comprising two rollers mounted to a frame. The two frames are rotatable about an axis parallel to the longitudinal axis of the rollers about a swivel pin. A wedge can be introduced between the two frame parts to define the size of the roller gap. The wedge is moveable by a pivot arm which is driven by an hydraulic cylinder. The frame parts are also tensioned relative to each other by a spring.

An object of the present invention is to provide an alternative means for maintaining a minimum axial distance between rollers on a harvesting machine. The invention further provides an alternative means for permitting sufficient yield of the rollers when a foreign body or a sudden increase in harvested material flows through the gap between the rollers.

According to the invention there is provided a roller assembly for a harvesting machine comprising two rollers mounted to two respective frames for rotation about their longitudinal axes, said rollers driven by a belt arrangement, the rollers spaced at an axial distance providing a longitudinal space therebetween through which harvested material passes, one frame moveable with respect to the other frame for adjustment of the axial distance and wherein a minimum axial distance is set by adjustable spacing means, characterised in that the belt arrangement is fitted around a tension pulley, said tension pulley maintaining a tension in the belt arrangement so that the rollers are biased towards the minimal axial distance and permifting movement of one frame to increase the axial distance should a foreign body or high volume harvest pass through the longitudinal space.

Preferred features of the invention are set out in the dependent claims 2 to 16

The use of the belt arrangement to maintain the rollers at a minimum axial distance reduces the need for other parts, such as springs or bracing means to be used thus reducing cost and time in manufacturing the roller assembly.

The invention will now be described, by example only with reference to the following drawings in which:
Figures 1 and 2 are cross sectional views of a forage harvester having a cracker roller assembly in accordance with the invention,
Figure 3 is an end view of a cracker roller assembly according to the invention,
Figure 4 is a perspective view of a cracker roller assembly according to the invention,
Figures 5a to 5e are views showing the adjustment assembly of the cracker roller assembly in accordance with the invention,
Figures 6 and 7 are more detailed end views of figure 3 showing the cracker roller assembly in an operational and non operational position,
Figure 8 is a detailed end view of figure 6 , and
Figure 9 is a cross sectional view of figure 8.

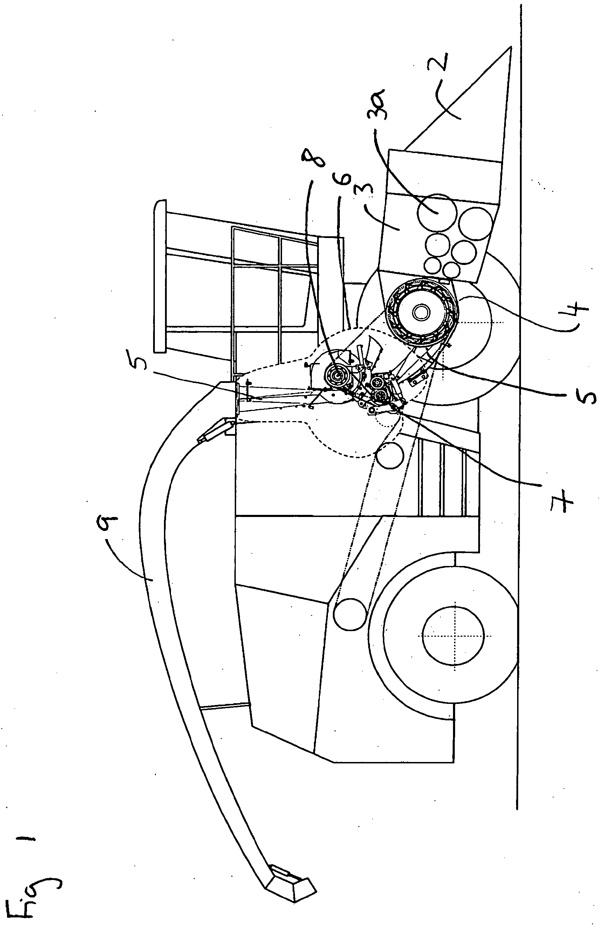

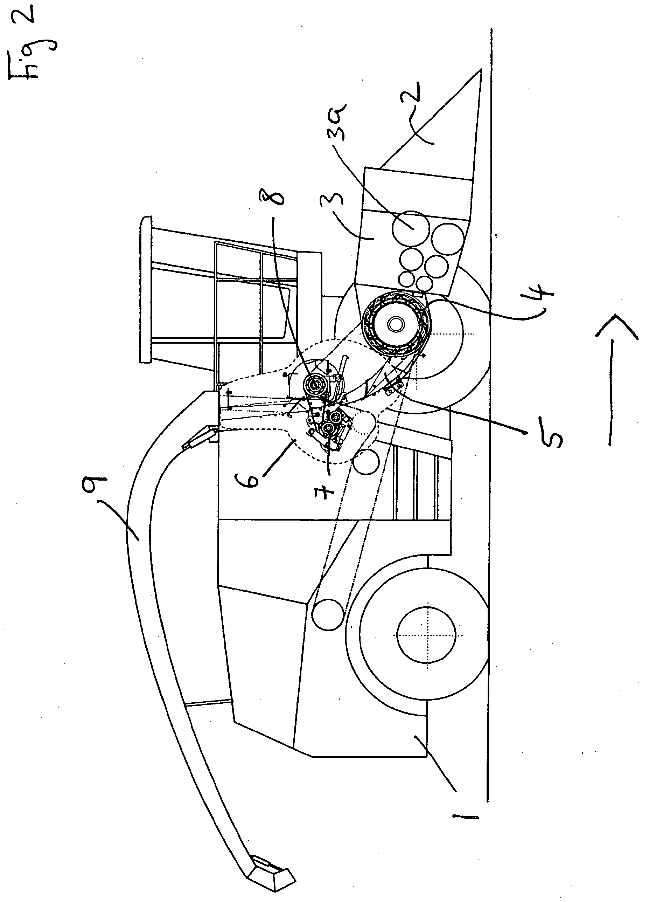

Figures 1 and 2 show a forage harvester 1 being driven in the direction of the arrow. The forage harvester is provided with a front attachment 2 which contains cutting equipment for cutting a crop. The cut crop is fed through a series of compression rolls 3a in a compression roller housing 3 to a chopper drum 4 where the crop is chopped into smaller pieces. The chopped crop passes through duct 5 and is fed through the cracker unit 6 where the crop is further crushed and threshed. The harvested crop is then blown upwards along duct 5 by accelerator 8 and exits through spout 9.

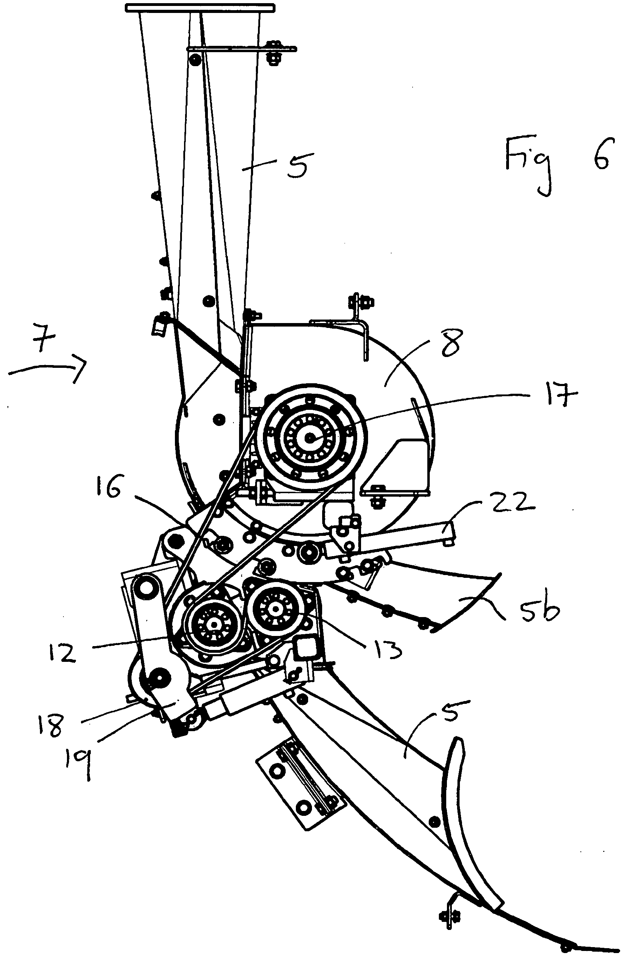

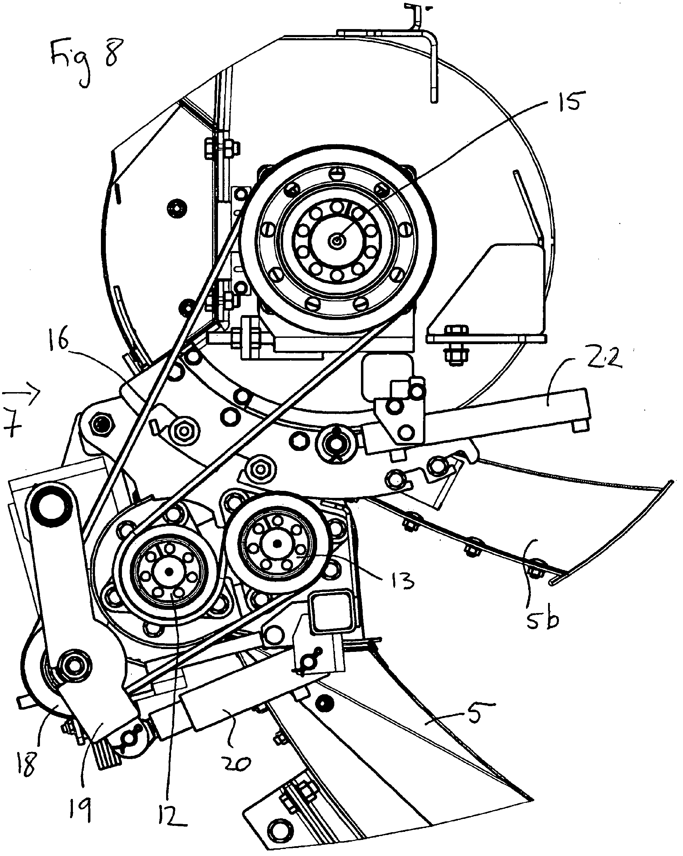

In figure 1 the cracker unit 6 is shown in an operational position which is shown in greater detail in figures 6 and 8. The cracker unit 6 houses a cracker roller assembly 7. Figure 2 shows the cracker unit 6 in a non operational position in which the cracker unit 6 is pivoted to the side of the duct 5 and therefore harvested crop by- passes the cracker roller assembly 7 as it moves through duct 5. The non operational position is shown more clearly in figure 6.

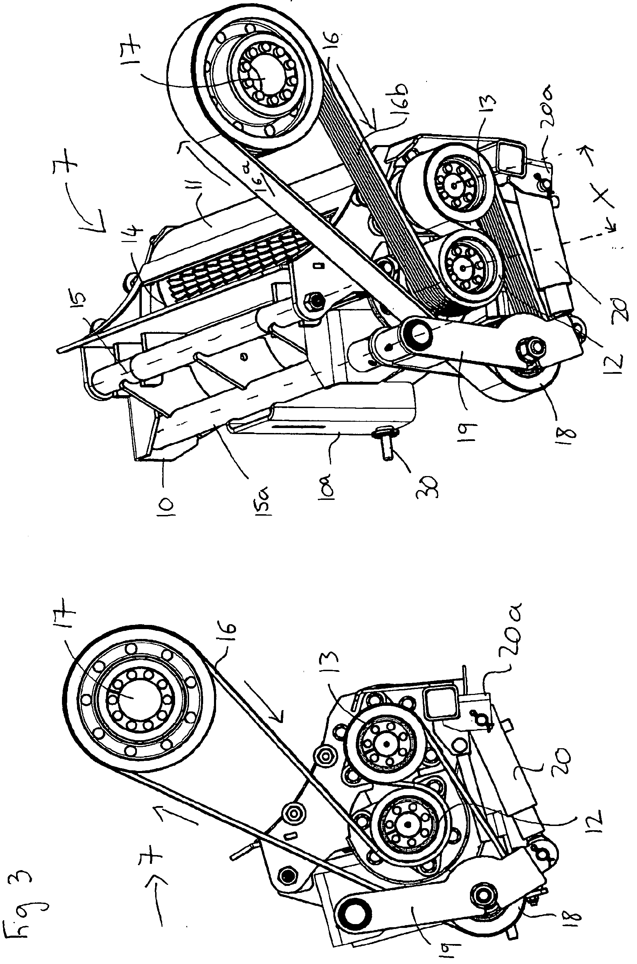

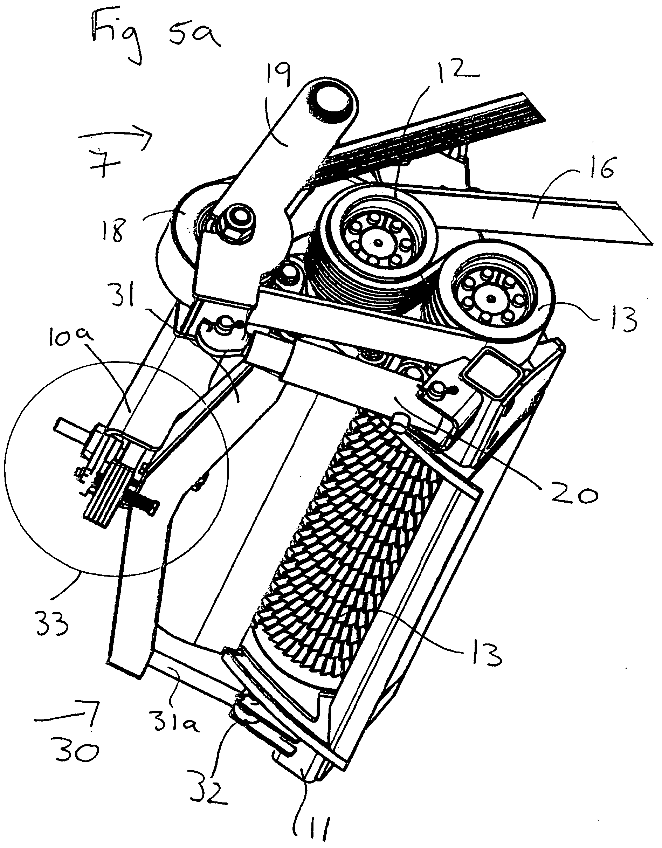

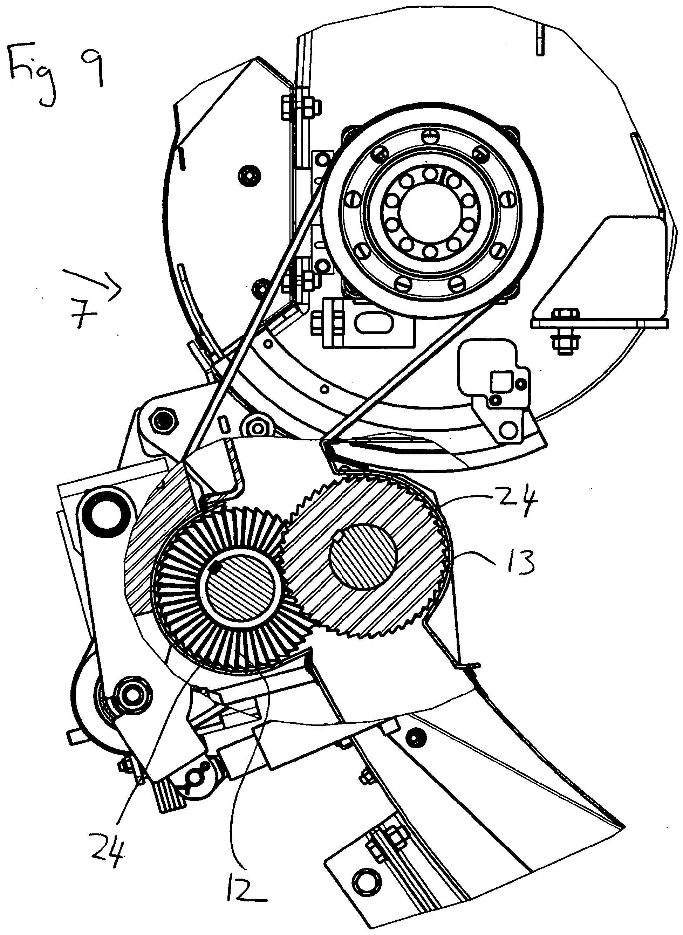

Figures 3 and 4 show a cracker roller assembly 7 according to the invention. The cracker roller assembly 7 comprises two frame parts 10 and 11 (not shown in figure 3). Two chopping rollers 12 and 13 are mounted to a respective frame part 10, 11. The cracker rollers 12, 13 are provided with teeth for cracking/crushing the harvested crop which can be seen more clearly in figures 5a and 9. The cracker rollers 12, 13 are mounted parallel to each other and are rotatable about their longitudinal axes. A longitudinal space between the rollers, the roller gap 14 allows the cut crop to pass between the rollers.

One of the frame parts 10 is mounted so that it can be pivoted about a longitudinal axis 15 which is parallel to the longitudinal axes of the rollers 12, 13. By pivoting frame part 10 about its longitudinal axis 15, roller 12 can be moved relative to roller 13 thus altering the axial distance X, and therefore the size of the roller gap 14. By axial distance it is meant the distance between the longitudinal axes of rollers 12, 13. Frame part 11 is fixed and is not moveable.

A spacing assembly 30 fixes the minimum axial distance of the roller gap 14 and is described in further detail below with reference to figures 5a to 5e.

Figure 5a is a perspective view of part of the cracker roller assembly 7 from underneath.

The spacing assembly 30 consists of a cross bar 31 which is connected to two side arms 31 a which are each pivotably connected to the fixed frame part 11 by connection means 32, for example a bolt. Cross bar 31 is provided with a length adjustable spacing means 33. Spacing means 33 is connected to an extension member 10a of frame part 10 to move frame part 10 relative to frame part 11.

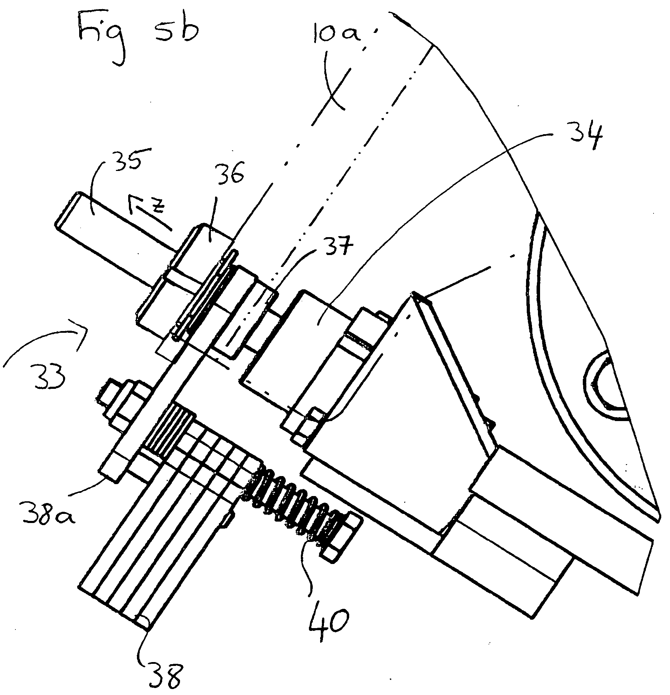

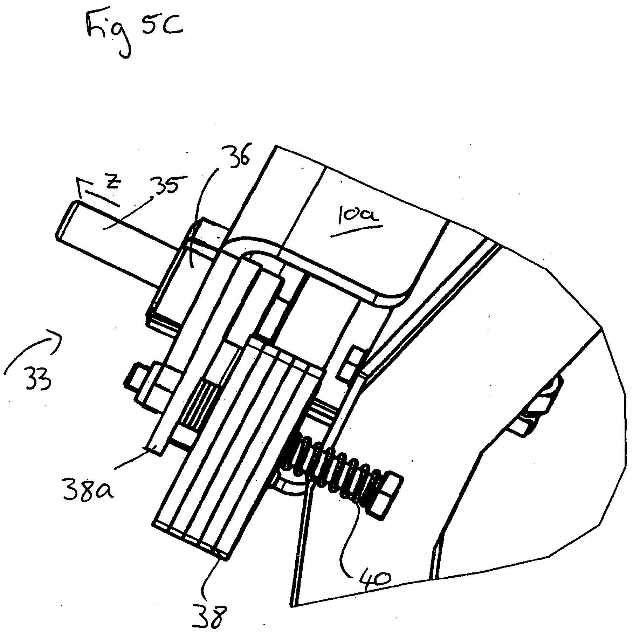

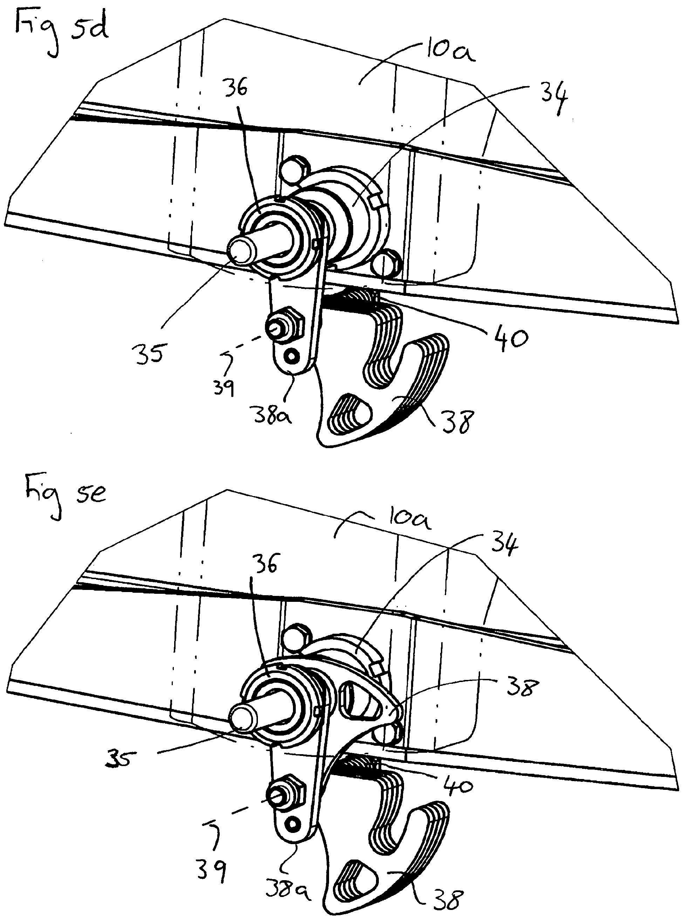

Spacing means 33 is shown more clearly in figures 5b, 5c, 5d and 5e which are perspective views of the spacing means 33. The spacing means 33 comprises a single acting pneumatic cylinder 34 having a rod 35 extendable in direction Z to move frame part 10. Alternatively, an hydraulic cylinder could be used. Extension member 10a is fixed to rod 35 by two threaded bushings 36 and 37 which are screwed against each other to keep extension member 10a in position. As rod 35 is extended or retracted, so frame part 10 pivots about axis 15. Rod 35 is also provided with a spacer holder 38a which hold a number of spacers 38 which can be rotated and placed between bushing 37 and pneumatic cylinder 34 to maintain a minimum axial distance between the rollers.

To adjust the axial distance X, that is the roller gap 14 the pneumatic cylinder 34 is charged temporarily with air extending rod 35 in direction Z. Spacers 38 can be pivoted about axis 39 into the space between bushing 37 and the pneumatic cylinder 34 as shown in figures 5c and 5e. In figures 5b and 5d none of the spacers 38 have been pivoted between the bushing 37 and cylinder 34 and instead all the spacers are suspended on the spacer holder 38a. The spacers 38 are kept in position by spring 40. Any number of spacers 38 can be chosen to be pivoted between bushing 37 and cylinder 34. If the pneumatic cylinder 34 is disconnected from the air supply frame part 10 (and therefore roller 12) will move under gravity towards roller 13 whilst cylinder 34 retracts. Frame part 10 and roller 12 will keep moving until bush 37 comes into contact with the spacers 38a, as shown in figures 5c and 5e thus defining the minimum axial distance of the roller gap 14. Since the pneumatic cylinder 34 is not pressurised during harvesting frame 10 and roller 12 can pivot relative to roller 13 and fixed frame part 11 to temporarily increase the roller gap 14, for example if a foreign objects pass through roller gap 14.

An end portion of each of the rollers 12, 13 project through the respective frame parts 10,11. The end portions are provided with a belt 16 to drive the rollers in opposite directions to convey the crop through the roller gap 14. The arrangement of the belt is such that the two rollers 12, 13 are biased towards each other. The belt 16 is fitted around a drive pulley 17, a tension pulley 18 and the two rollers 12, 13. Drive pulley 17 may be driven by a further belt (not shown) which is used to drive the chopper drum 4. Further deflection pulleys (not shown) may also be used in the belt arrangement. The tension pulley 18 is located between the drive pulley 17 and roller 11 in a portion of the belt 16a under high tension. The belt 16 is positioned in an "S" configuration around rollers 12, 13 so that one side of the belt makes contact with one roller and the other side of the belt makes contact with the other roller. The belt may be a V-belt.

The tension pulley 18 is mounted to a bracket 19 which is pivotally mounted to frame part 10. The bracket 19 and therefore tension pulley 18 can pivot about an axis 15a which is parallel to axis 15 and the roller axes.

An hydraulic cylinder 20 is connected to frame part 11 by a U-shaped bracket 20a. The cylinder 20 provides adjusting means for adjusting the tension in belt 16. As hydraulic cylinder 20 is extended so bracket 19 and therefore tension pulley 18 is pivoted away from roller 12 increasing the tension in belt 16. The higher the tension in the belt 16, the greater the force must be exerted on roller 12 to pivot it away from roller 13. Hydraulic cylinder 20 therefore provides means for controlling the amount (volume) of harvested crop which can flow through the roller gap at a given time and the size of foreign objects which can pass through the roller gap before roller 12 is caused to pivot away from roller 13 increasing roller gap 14. Hydraulic cylinder 20 may be set at a desired pressure to give the desired tension in the belt. Alternatively, the cylinder may be connected to a control system to adjust the pressure in the cylinder (and therefore belt tension) during harvesting. By controlling the pressure in the cylinder 20 the movement of roller 12 in the case of a foreign body or increased throughput can be controlled. An alternative adjusting means such as pneumatic cylinders, spacers or other telescopic means may be used.

If the belt is moving in the direction shown by the arrows, roller 12 rotates in an anti-clockwise direction and roller 13 rotates in a clockwise direction so that harvested crop (not shown) is conveyed in an upward direction through the roller gap 14. The roller gap 14 is set at a minimum axial distance by spacing means 33. The minimum axial distance may be increased or decreased depending on the type of crop and desired throughput.

If a foreign body, or a sudden increase in harvested material moves through the grinding gap, a force is exerted on roller 12. Since the roller 12 is pivotable about axis 15, the force results in a torque about axis 15 resulting in roller 12 pivoting about axis 15 away from roller 13. This in turn increases the tension in the slacker part of the belt 16b which together with the tension in belt part 16a exerts a force on the tension pulley 18 in the direction of roller 13. The force exerted on the tension pulley 18 is counteracted by the force exerted by the hydraulic cylinder 20 on the pulley 18. The position of cylinder 20 is fixed by a control valve (not shown). As the force exerted on the cylinder by the pulley 18 increases, the pressure in the cylinder increases and an overpressure protection valve (not shown) opens allowing the cylinder 20 to be contracted. As a result the tension in the belt decreases, allowing roller 12 to pivot further away from roller 13 increasing roller gap 14.

Once the foreign body, or increased throughput has passed through roller gap 14 the force exerted on roller 12 by the foreign body, or increased throughput decreases and the tension in the belt 16 pulls roller 12 back towards roller 13 until the pre-set minimum axial distance between the rollers is reached. As the tension in the belt decreases, the pressure in the cylinder decreases and the overpressure control valves closes allowing the cylinder to return to its selected pressure. The cylinder can thus be extended pushing tension pulley 18 away from roller 12 restoring the desired tension in the belt.

A control system may be provided to control cylinder 20.

By measuring the power of the cracker rollers, and detecting the operating pressure of the cylinder 20, the necessary force the cylinder 20 needs to exert on the roller 12 for it to pivot out when a torque is exceeded can be calculated. The pressure in the cylinder 20 can be continually adjusted as result of the power, so that pressure is not applied to the cylinder 20 when the rollers are idle and so that the tension in the belt can be regulated depending on the throughput of the harvested material.

Further, the pressurisation of the cylinder 20 may be adjusted according to foreign object detection means installed, for example in the header, intake or compression roll housing of the forage harvester. Detection of a foreign body before it enters the roller gap, means the belt tension can adjusted accordingly reducing wear and damage on the roller assembly parts.

Figure 6 is an end view of the cracker roller assembly 7 in its operational position. Crop duct 5 is open allowing harvested crop to move from the chopper drum (not shown) below the assembly 7 through the duct 5 and through the cracker assembly and via accelerator 8 upwards through the spout (not shown). Duct part 5b which can be used to by-pass the assembly 7 is not in use and is shown held to the side.

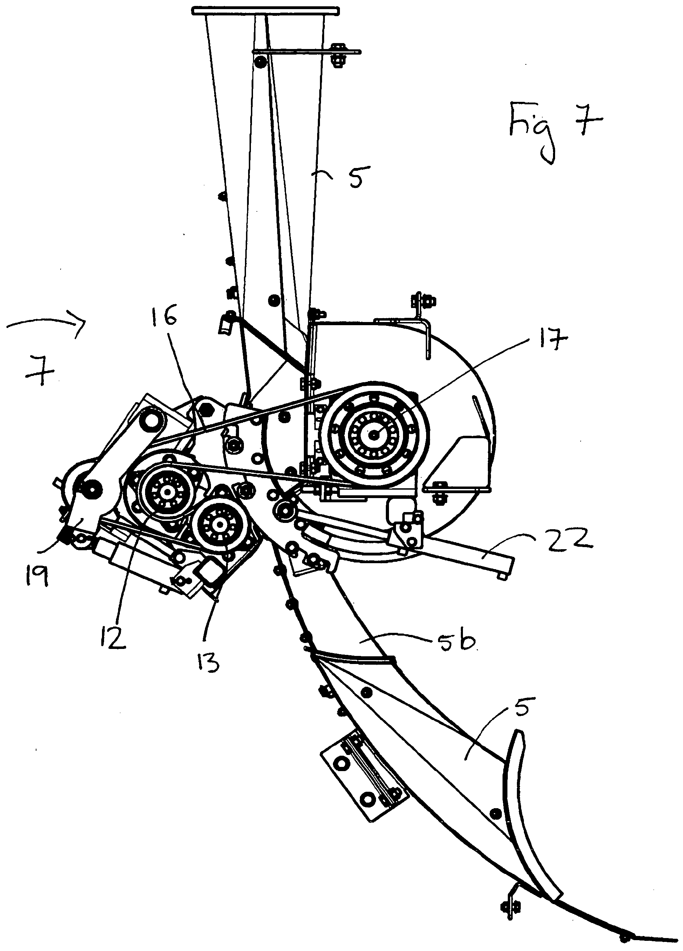

Figure 7 shows the same view as figure 5 but with the cracker roller assembly 7 in a non operational position. In this position, the cracker roller assembly is pivoted to the side about drive pulley 17 away from duct 5. Duct part 5b is aligned to duct 5 so that harvested material can flow through duct 5 bypassing the cracker roller assembly. The cracker roller assembly may be moved into the non-operational position if the harvested material does not require further processing by the cracker unit and for maintenance and cleaning of the assembly. The cracker roller assembly 7 can be moved between operational and non operational positions by pivot cylinder 22 which pivots the assembly about an axis which is parallel or approximately parallel with the axis of drive pulley 17.

Figure 8 is a detailed view of figure 6. Figure 9 is a cross sectional view of figure 6 showing the alignment and teeth 24 of the rollers 12, 13.

The use of the drive belt to maintain the minimum axial distance between the rollers whilst allowing the rollers to yield when a foreign object enters the grinding gap means the cracker unit assembly is more compact than other assemblies which require other mechanical devices to do the same task.

## Claims

1. A roller assembly (7) for a harvesting machine comprising two rollers (12, 13) mounted to two respective frames (10, 11) for rotation about their longitudinal axes, said rollers (12, 13) driven by a belt arrangement, the rollers spaced at an axial distance providing a longitudinal spaced (14) therebetween through which harvested material passes, one frame (10, 11) moveable with respect to the other frame for adjustment of the axial distance and wherein a minimum axial distance is set by adjustable spacing means (33) **characterised in that** the belt arrangement is fitted around a tension pulley (18), said tension pulley (18) maintaining a tension in the belt arrangement so that the rollers (12, 13) are biased towards the minimal axial distance and permitting movement of one frame (10, 11) to increase the axial distance should a foreign body or high volume harvest pass through the longitudinal space.

2. A roller assembly (7) as claimed in claim 1 wherein one frame (10, 11) is moveable with respect to the other frame (10, 11) which is not moveable.

3. A roller assembly (7) as claimed in any preceding claim wherein one frame (10, 11) is pivotable about a longitudinal axis parallel to the longitudinal axis of its respective roller (12, 13)

4. A roller assembly (7) as claimed in any preceding claim wherein the spacing means comprises an hydraulic cylinder or a pneumatic cylinder (34).

5. A roller assembly (7) as claimed in any preceding claim wherein tension in the belt arrangement is changed by adjustment of the tension pulley (18).

6. A roller assembly (7) as claimed in claim 5 wherein the tension pulley (18) is adjusted by adjusting means comprising an hydraulic (20) or a pneumatic cylinder.

7. A roller assembly (7) as claimed in claim 6 wherein the pressure of the adjusting means (20) is adjustable as a function of the power to the rollers (12, 13) allowing the tension in the belt arrangement to be adjusted.

8. A roller assembly (7) as claimed in any preceding claim wherein the rollers (12, 13) are driven in opposite directions.

9. A roller assembly (7) as claimed in any preceding claim wherein the belt arrangement comprises a main drive pulley (17).

10. A roller assembly (7) as claimed in claim 9 wherein the tension pulley (18) is positioned between the drive pulley (17) and a roller (12, 13).

11. A roller assembly (7) as claimed in any preceding claim wherein the tension pulley (18) is pivotally attached to one frame (12, 13).

12. A roller assembly (7) as claimed in any of claims 6 to 11 wherein the adjusting means is attached to the tension pulley (17) and one frame (10, 11).

13. A roller assembly (7) as claimed in any preceding claim wherein the belt arrangement comprises a V-belt drive.

14. A roller assembly (7) as claimed in any of claims 1 to 13 wherein the belt arrangement comprises a flat belt drive.

15. A roller assembly (7) as claimed in any preceding claim wherein a foreign body between the rollers (12, 13) forces one of the rollers (12, 13) to move away from the other by movement of the respective pivoting frame (10, 11) and the increased tension in the belt arrangement exerts a force on the tension pulley (18) in the direction of one of the rollers (12, 13).

16. A roller assembly (7) as claimed in any preceding claim wherein the roller assembly (7) is a cracker roller assembly for a forage harvester (1).

## Patentansprüche

1. Walzenanordnung (7) für eine Erntemaschine mit zwei Walzen (12, 13), die an zwei entsprechenden Rahmen (10, 11) für eine Drehung um ihre Längsachsen montiert sind, wobei die Walzen (12, 13) durch eine Riemenanordnung angetrieben sind, wobei die Walzen mit einem axialen Abstand beabstandet sind, der einen Längsfreiraum (14) zwischen ihnen bereitstellt, durch den geerntetes Material hindurchtritt, wobei ein Rahmen (10, 11) zur Einstellung des axialen Abstands relativ zu dem anderen Rahmen bewegbar ist und wobei ein minimaler axialer Abstand durch ein einstellbares Abstandsmittel (33) bestimmt wird, **dadurch gekennzeichnet, dass**
die Riemenanordnung eine Spannrolle (18) umgibt, wobei die Spannrolle (18) eine Spannung in der Riemenanordnung aufrechterhält, so dass die Walzen (12, 13) in Richtung des minimalen axialen Abstands beaufschlagt werden und eine Bewegung eines Rahmens (10, 11) ermöglicht ist, um den axialen Abstand zu vergrößern, wenn ein Fremdkörper oder großvolumiges Erntegut durch den Längsfreiraum hindurchtritt.

2. Walzenanordnung (7) nach Anspruch 1, wobei ein Rahmen (10, 11) relativ zu dem anderen unbeweglichen Rahmen (10, 11) beweglich ist.

3. Walzenanordnung (7) nach einem der vorhergehenden Ansprüche, wobei ein Rahmen (10, 11) um eine Längsachse parallel zu der Längsachse seiner entsprechenden Walze (12, 13) schwenkbar ist.

4. Walzenanordnung (7) nach einem der vorhergehenden Ansprüche, wobei das Abstandsmittel einen Hydraulikzylinder oder einen Pneumatikzylinder (34) aufweist.

5. Walzenanordnung (7) nach einem der vorhergehenden Ansprüche, wobei die Spannung in der Riemenanordnung durch eine Einstellung der Spannrolle (18) geändert wird.

6. Walzenanordnung (7) nach Anspruch 5, wobei die Spannrolle (18) durch ein Einstellmittel mit einem Hydraulikzylinder (20) oder einem Pneumatikzylinder eingestellt wird.

7. Walzenanordnung (7) nach Anspruch 6, wobei der Druck des Einstellmittels (20) als eine Funktion der Antriebsleistung der Walzen (12, 13) einstellbar ist, welche die Einstellung des Spannung in der Riemenanordnung ermöglicht.

8. Walzenanordnung (7) nach einem der vorhergehenden Ansprüche, wobei die Walzen (12, 13) in entgegengesetzte Richtung angetrieben werden.

9. Walzenanordnung (7) nach einem der vorhergehenden Ansprüche, wobei die Riemenanordnung eine Hauptantriebsscheibe (17) aufweist.

10. Walzenanordnung (7) nach Anspruch 9, wobei die Spannrolle (18) zwischen der Antriebsscheibe (17) und einer Walze (12, 13) angeordnet ist.

11. Walzenanordnung (7) nach einem der vorhergehenden Ansprüche, wobei die Spannrolle (18) drehbar an einem Rahmen (12, 13) befestigt ist.

12. Walzenanordnung (7) nach einem der Ansprüche 6 bis 11, wobei das Einstellmittel an der Spannrolle (17) und einem Rahmen (10, 11) befestigt ist.

13. Walzenanordnung (7) nach einem der vorhergehenden Ansprüche, wobei die Riemenanordnung einen Keilriemenantrieb aufweist.

14. Walzenanordnung (7) nach einem der Ansprüche 1 bis 13, wobei die Riemenanordnung einen Flachriemenantrieb aufweist.

15. Walzenanordnung (7) nach einem der vorhergehenden Ansprüche, wobei ein Fremdkörper zwischen den Walzen (12, 13) eine der Walzen (12, 13) durch eine Bewegung des entsprechenden verschwenkenden Rahmens (10,11) von der anderen wegbewegt und die erhöhte Spannung in der Riemenanordnung eine Kraft auf die Spannrolle (18) in Richtung einer der Walzen (12, 13) ausübt.

16. Walzenanordnung (7) nach einem der vorhergehenden Ansprüche, wobei die Walzenanordnung (7) eine Cracker-Walzenanordnung für einen Feldhäcksler (1) ist.

## Revendications

1. Ensemble à rouleaux (7) pour une moissonneuse comprenant deux rouleaux (12, 13) montés sur deux châssis (10, 11) respectifs de manière à pouvoir tourner autour de leurs axes longitudinaux, lesdits rouleaux (12, 13) étant entraînés par un agencement à courroie, les rouleaux espacés à une certaine distance axiale assurant un espace longitudinal (14) entre eux à travers lequel passent les matériaux moissonnés, un premier châssis (10, 11) pouvant être déplacé par rapport à l'autre châssis afin de régler la distance axiale et dans lequel une distance axiale minimum est réglée par des moyens d'espacement réglables (33), **caractérisé en ce que** l'agencement à courroie est assemblé autour d'une poulie de tension (18), ladite poulie de tension (18) maintenant une tension sur l'agencement à coudoie de telle sorte que les rouleaux (12, 13) sont préchargés sur la distance axiale minimale et permettant le mouvement du premier châssis (10, 11) en vue d'augmenter la distance axiale si un objet étranger ou un élément récolté de volume important passe à travers l'espace longitudinal.

2. Ensemble à rouleaux (7) selon la revendication 1, dans lequel un premier châssis (10, 11) peut être déplacé par rapport à l'autre châssis (10, 11) qui n'est pas mobile.

3. Ensemble à rouleaux (7) selon l'une quelconque des revendications précédentes, dans lequel un châssis (10, 11) peut pivoter autour d'un axe longitudinal parallèle à l'axe longitudinal de son rouleau respectif (12, 13).

4. Ensemble à rouleaux (7) selon l'une quelconque des revendications précédentes, dans lequel le moyen d'espacement comprend un vérin hydraulique ou un vérin pneumatique (34).

5. Ensemble à rouleaux (7) selon l'une quelconque des revendications précédentes, dans lequel la tension sur l'agencement à coudoie est modifiée par réglage de la poulie de tension (18).

6. Ensemble à rouleaux (7) selon la revendication 5, dans lequel la poulie de tension (18) est réglée par un moyen de réglage comprenant un vérin hydraulique (20) ou un vérin pneumatique.

7. Ensemble à rouleaux (7) selon la revendication 6, dans lequel la pression du moyen de réglage (20) peut être réglée en fonction de la puissance des rouleaux (12, 13) permettant le réglage de la tension sur l'agencement à courroie.

8. Ensemble à rouleaux (7) selon l'une quelconque des revendications précédentes, dans lequel les rouleaux (12, 13) sont entraînés dans des sens opposés.

9. Ensemble à rouleaux (7) selon l'une quelconque des revendications précédentes, dans lequel l'agencement à courroie comprend une poulie d'entraînement principale (17).

10. Ensemble à rouleaux (7) selon la revendication 9, dans lequel la poulie de tension (18) est positionnée entre la poulie d'entraînement (17) et un rouleau (12, 13).

11. Ensemble à rouleaux (7) selon l'une quelconque des revendications précédentes, dans lequel la poulie de tension (18) est fixée de manière à pouvoir pivoter sur un châssis (12, 13 (ou 10, 11)).

12. Ensemble à rouleaux (7) selon l'une quelconque des revendications 6 à 11, dans lequel le moyen de réglage est fixé sur la poulie de tension (17) et un premier châssis (10, 11).

13. Ensemble à rouleaux (7) selon l'une quelconque des revendications précédentes, dans lequel l'agencement à courroie comprend un entraînement à coudoie en V.

14. Ensemble à rouleaux (7) selon l'une quelconque des revendications 1 à 13, dans lequel l'agencement à courroie comprend un dispositif d'entraînement à coudoie plate.

15. Ensemble à rouleaux (7) selon l'une quelconque des revendications précédentes, dans lequel un corps étranger entre les rouleaux (12, 13) force l'un des rouleaux (12, 13) à se déplacer à l'opposé de l'autre par un mouvement du châssis pivotant (10, 11) respectif et la tension accrue sur l'agencement à courroie exerce un effort sur la poulie de tension (18) dans la direction de l'un des rouleaux (12, 13).

16. Ensemble à rouleaux (7) selon l'une quelconque des revendications précédentes, dans lequel l'ensemble à rouleaux (7) est un ensemble à rouleau broyeur pour une moissonneuse de fourrage (1).
